# EUROPEAN PATENT SPECIFICATION

(11) **EP 1 944 223 B1**
(45) Date of publication and mention of the grant of the patent: **10.03.2010**
(21) Application number: 08150132.2
(22) Date of filing: 09.01.2008
(51) Int. Cl.: B62D 25/12, E05D 11/10, E05C 17/02

(54) **Vehicle bonnet**
Fahrzeugmotorhaube
Capot de véhicule

(30) Priority: 10.01.2007 IT TO20070014
(43) Date of publication of application: 16.07.2008
(73) Proprietor: FIAT AUTO S.p.A., 10135 Torino (IT)
(72) Inventor: Floris, Ezio, 10135 Torino (IT); Tibaldi, Luciano, 10135 Torino (IT)
(74) Representative: Jorio, Paolo

(56) References cited:
- DE-A1- 3 917 967
- FR-A1- 2 714 929
- US-A1- 2002 000 022

## Description

The present invention relates to a vehicle bonnet.

On a vehicle, in particular a motor vehicle, it is known to use a bonnet, in particular an engine bonnet, comprising a closing hatch; a lever rigidly connected to the hatch and hingeable on the body of the vehicle so as to allow the hatch to rotate, relative to the body, about a hinging axis between an open position and a closed position; and a device for locking the hatch in the open position.

The said locking device normally comprises a rod which is hinged at one end on the body of the vehicle and may be displaced manually between a rest position, where the rod is arranged in a substantially horizontal position and is locked in a releasable manner and by means of snap engagement on the body by means of an elastic fork member which is fixed to the body and normally made of plastic, and an operating position, where the rod is arranged in a raised position and a free end thereof engages inside a keyed seat formed in the bonnet or in a plastic part which is connected to the bonnet.

The known locking device described above has certain drawbacks due to both the large number of - not always easy - manual operations which the user must perform in order to keep the bonnet in the open position and, at the same time, release the rod from the elastic fork member for locking on the body, raise the rod and engage the end of the said rod inside the keyed seat of the bonnet, and to the fact that its use involves both the assembly, on the bonnet and on the body, of a certain number of components and the provision of operating space for the associated rod.

US 2002/000022 A1 discloses a compact, closure panel prop assembly, which incorporates a spring activated locking pin. Such pin automatically engages a closure panel prop when the closure panel is elevated to a predetermined height.

FR-A1-2714929 discloses a hinge which has a base section attached to a fixed part of the vehicle and a lever attached to the car bonnet. The hinge has a blocking mechanism, which automatically engages to keep the hinge in its open position. There is a handle to disengage the blocking mechanism so that the bonnet can be closed.

DE3917967 A1 discloses a locking device for a car boot lid or bonnet, which is attached to the car body by links spaced apart and hinging on parallel axes. The links are locked by a spring-loaded lever, which automatically locks bonnet in open position.

The object of the present invention is to provide a bonnet which does not have the abovementioned drawbacks.

According to the present invention a vehicle bonnet is provided, the bonnet comprising a closing hatch; a lever rigidly connected to the hatch and hingeable on the body of the vehicle so as to allow the hatch to rotate, relative to the body, about a hinging axis between an open position and a closed position; and a device for locking the hatch in the open position; the locking device comprising a stop device which is mounted on the lever and is able to lock by means of snap-engagement, in a releasable manner, the said lever with respect to the body in a given raised position so as to lock the hatch in the open position; characterised in that the locking device comprises seat means which are provided on the body, parallel to the hinging axis and at a given distance from the said hinging axis; and in that the stop device comprises a pin able to snap-engage with the seat means as a result of the thrusting force of spring means; the pin being mounted on the lever, extending parallel to the hinging axis, being movable, relative to the lever, so as to rotate about a pivoting axis which is transverse to the hinging axis, and being movable, with the lever, along a given path; and the seat means being arranged along this path.

According to a preferred embodiment of the bonnet of the present invention, the lever forms part of a compass comprising a frame which can be rigidly connected to the body; the lever is hinged on the frame so as to rotate, relative to the said frame, about the said hinging axis, and the locking device comprises a seat formed on the frame parallel to the hinging axis and at a given distance from the said hinging axis; and in which the pin is able to snap-engage with the seat as a result of the thrusting force of spring means, is mounted on the lever, extends parallel to the hinging axis, is movable so as to rotate, relative to the lever, about a pivoting axis transverse to the hinging axis, and is movable, with the lever, along a given path extending through the seat.

Preferably, according to the said preferred embodiment, the frame comprises a plate transverse to the hinging axis; the seat being formed through the plate; the path extends along the said plate; and the spring means are mounted so as to constantly push the pin in a direction substantially parallel to the hinging axis and towards the plate.

According to the preferred embodiment of the present invention, the stop device comprises a rocker arm mounted on the lever so as to rotate, relative to the said lever, about the pivoting axis and comprising a first arm provided with the pin and a second arm defining a manually operated lever; and the spring means being arranged between the second arm and the lever so as to push the pin towards the frame.

The present invention will now be described with reference to the accompanying drawings, which show a nonlimiting example of embodiment thereof in which:
- Figure 1 shows schematically a vehicle provided with a bonnet designed in accordance with the principles of the present invention;
- Figure 2 shows, on a larger scale and in side elevation view, a detail of Figure 1 in a first operating position;
- Figure 3 shows, on a larger scale and in a side elevation view, the detail of Figure 2 in a second operating position;
- Figure 4 shows a cross-section along the line IV-IV of Figure 3; and
- Figure 5 is similar to Figure 4 and shows the detail of Figure 4 in a different operating position.

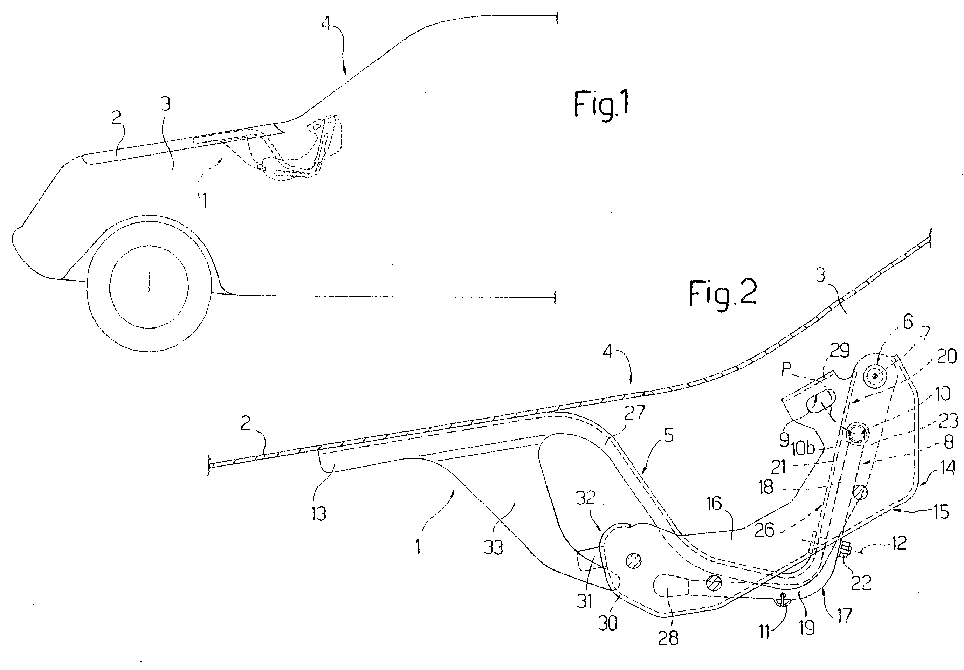

In Figures 1 to 3, 1 denotes in its entirety a bonnet 1, in particular an engine bonnet comprising a closing hatch 2 mounted on a body 3 of an associated vehicle 4, in particular a motor vehicle.

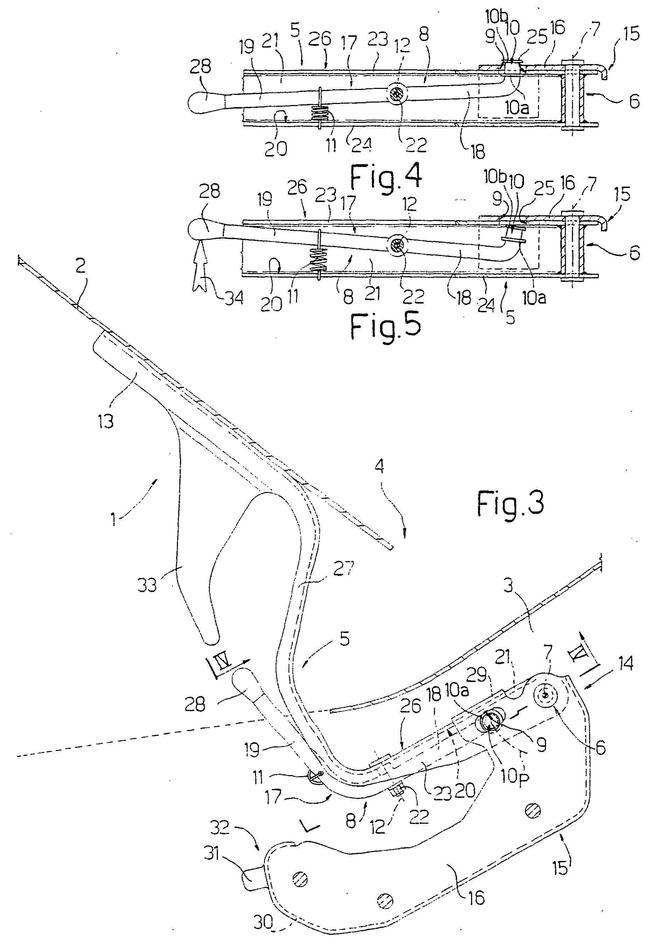

The bonnet 1 comprises a lever 5 which can be connected on one side to the hatch 2 and on the other side, by means of a hinge 6, to the body 3 so as to rotate about an axis 7 which is substantially horizontal with respect to the said body 3. The bonnet 1 comprises, moreover, a locking device comprising, in turn, a stop device 8 which is mounted on the lever 5 for locking by means of snap-engagement, in a releasable manner, the said lever 5 with respect to the body 3 in an open position shown in Figure 3.

The locking device comprises, moreover, an elongated seat 9 which is formed on the body 3 parallel to the axis 7 and at a given distance from the said axis 7; and the stop device 8 comprises a pin 10 which is able to snap-engage with the seat 9 as a result of the thrusting force of a spring 11 and is mounted on the lever 5. In particular, the pin 10 extends parallel to the axis 7, is mounted on the lever 5 so as to rotate, relative to the said lever 5, about a pivoting axis 12 transverse to the axis 7, and is movable, with the lever 5, along a circular path P, which is coaxial with the axis 7 and extends in front of the seat 9.

At its free end, the pin 10 terminates in a circular flange 10b having a diameter slightly smaller than the width of the seat 9; the pin 10 has, moreover, a circular flange 10a at a distance from the flange 10b and with a diameter greater than that of the said flange 10b.

The lever 5 is provided, at its end opposite to that carrying the hinge 6, with a plate 13 able to allow the rigid connection of the lever 5 to the hatch 2 and the hatch 2 to rotate, during use, together with the lever 5, about the hinging axis 7 between a closed position shown in Figures 1 and 2 and the open position shown in Figure 3 where the hatch 2 is automatically locked by the entry of the pin 10 inside the seat 9 as a result of the thrusting force of the spring 11.

According to the preferred embodiment shown in Figures 1 to 3, the lever 5 forms part of a compass 14 comprising a frame 15 substantially defined by an elongated plate 16 which has the seat 9 which is formed through the said plate 16, is connected to the lever 5 by means of the hinge 6, lies in a substantially vertical plane perpendicular to the axis 7 and is rigidly connected to the body 3.

The plate 16 acts as a locating means for the pin 10 which is constantly pressed by the spring 11 against the said plate 16 in a direction substantially parallel to the axis 7, it moves, during use, in contact with the plate 16 during its movements along the path P and engages with the seat 9 when the hatch 2 reaches its open position.

The stop device 8 comprises, in addition to the pin 10 and the spring 11, a rocker arm 17 mounted on the lever 5 so as to rotate, relative to the said lever 5, about the pivoting axis 12 and comprising an arm 18, on the free end of which the pin 10 is mounted, and an arm 19 defining a lever for manually operating the said stop device 8.

In accordance with that which is shown more clearly in Figures 4 and 5, the lever 5 has, viewed in cross-section, a substantially U-shaped form so as to define a longitudinal channel 20 limited by a bottom wall 21 arranged perpendicularly with respect to the plate 16 and passed through by a bolt 22 which is coaxial with the axis 12 for pivoting and connecting the rocker arm 17 on/to the lever 5. The channel 20 is moreover limited by two side walls 23 and 24 which are transverse to the axis 7 and the side wall 23 of which faces the frame 15 and has a through-hole 25 engaged by the pin 10 and having a diameter smaller than the diameter of the flange 10a and greater than that of the flange 10b, while the wall 24 has fastened thereto one end of the spring 11, the other end of which is fastened to the arm 19 of the rocker arm 17.

The lever 5 has a straight section 26 extending from the hinge 6 and a substantially S-shaped section 27 with the plate 13 mounted on its end opposite to the end connected, substantially at right-angles, to the section 26; and the arm 18 of the rocker arm 17 is housed inside the portion of the channel 20 which extends along the section 26, while the arm 19 is arranged partially outside the portion of the channel 20 which extends along the section 27 and terminates in an operating knob 28.

Should the stop device 8 fail to operate, in order to prevent the hatch 2 from being able to be displaced, during opening, beyond the open position shown in Figure 3, the frame 15 comprises a stop lug 29 projecting from the periphery of the plate 16 parallel to the axis 7 and arranged along the movement path of the lever 5 so as to prevent the hole 25 of the said lever 5 from passing beyond the position where it is coaxial with the seat 9.

In order to help prevent, in the event of an impact, the hatch 2 from being able to move backwards, becoming distorted and lifting upwards, the plate 16 has at the front a folded edge 30 which is provided laterally with an L-shaped lug 31 and defines, together with the lug 31, a lateral fastening and retaining member 32 for a curved strut 33 which projects towards the frame 15 from an end portion of the section 26 of the lever 5 and, when the hatch 2 is in the closed position shown in Figure 2, engages with its end underneath a first section of the lug 31 and engages laterally with a second section of the said lug 31.

The operating principle of the bonnet 1 can be readily understood from the above description and does not require further explanation. It should in any case be pointed out that the hatch 2, once it has reached the open position shown in Figure 3 where it is stopped by contact against the lug 29, is automatically locked in this position by the snap-engaging action of the pin 10. In this configuration, the flange 10a comes into contact against the edge of the hole 25, while the flange 10b projects from the seat 9.

Once the hatch 2 is open, as a result of the weight of the hatch 2, the pin 10 rests against the bottom edge of the seat 9, while the flange 10b, facing directly this bottom edge, prevents the pin 10 from coming out of the seat 9 owing to accidental operation of the knob 28.

In order to release the hatch 2, it is sufficient for the user to slightly raise the hatch 2 until it reaches the stop position of the lug 29, where the hole 25 and the seat 9 are coaxial with each other, and operate the knob 28 in the direction of the arrow 34 shown in Figure 5 so as to extract the pin 10 from the seat 9 and allow the lever 5 to rotate downwards about the axis 7.

## Claims

1. Vehicle bonnet, the bonnet (1) comprising a closing hatch (2); a lever (5) rigidly connected to the hatch (2) and hingeable on the body (3) of the vehicle so as to allow the hatch (2) to rotate, relative to the body (3), about a hinging axis (7) between an open position and a closed position; and a device for locking the hatch (2) in the open position; the locking device comprising a stop device (8) which is mounted on the lever (5) and is able to lock by means of snap-engagement, in a releasable manner, the said lever (5) with respect to the body (3) in a given raised position so as to lock the hatch (2) in the open position;
**characterised in that** the locking device comprises seat means (9) which are provided on the body (3) parallel to the hinging axis (7) and at a given distance from the said hinging axis (7); and **in that** the stop device (8) comprises a pin (10) able to snap-engage with the seat means (9) as a result of the thrusting force of spring means (11); the pin (10) being mounted on the lever (5), extending parallel to the hinging axis (7), being movable, with respect to the lever (5), so as to rotate about a pivoting axis (12) transverse to the hinging axis (7) and being movable, with the lever (5), along a given path (P); and the seat means (9) being arranged along this path (P).

2. Bonnet according to Claim 1, in which the lever (5) forms part of a compass (14) comprising a frame (15) which can be rigidly connected to the body (3); the lever (5) being hinged on the frame (15) so as to rotate, relative to the said frame (15), about the hinging axis (7).

3. Bonnet according to Claim 2, in which the locking device comprises a seat (9) formed in the frame (15) parallel to the hinging axis (7) and at a given distance from the said hinging axis; and in which the pin (10) is able to able to snap-engage with the seat (9) as a result of the thrusting force of spring means (11), is mounted on the lever (5), extends parallel to the hinging axis (7), is movable so as to rotate, relative to the lever (5), about a pivoting axis (12) transverse to the hinging axis (7), and is movable, with the lever (5), along a given path (P) extending through the seat (9).

4. Bonnet according to Claim 3, in which the frame (15) comprises a plate (16) transverse to the hinging axis (7); the seat (9) being formed through the plate (16) and the path (P) extending along the said plate (16).

5. Bonnet according to Claim 3 or 4, in which the spring means (11) are mounted so as to push constantly the pin (10) in a direction substantially parallel to the hinging axis (7) and towards the plate (16).

6. Bonnet according to Claims 3 to 5, in which the stop device (8) comprises a rocker arm (17) mounted on the lever (5) so as to rotate, relative to the said lever (5), about the pivoting axis (12) and comprising a first arm (18) provided with the pin (10) and a second arm (19) defining a lever for manually releasing the said stop device (8); the spring means (11) being arranged between the second arm (19) and the lever (5) so as to push the pin (10) towards the frame (15).

7. Bonnet according to Claim 6, in which the lever (5) has, viewed in cross-section, a longitudinal channel (20) with a bottom wall (21) and two side walls (23, 24) which are transverse to the hinging axis (7) and one of which (23) faces the frame (15); at least the first arm (18) of the rocker arm (17) being housed inside the channel (20); and the side wall (23) facing the frame (15) having a through-hole (25) engaged by the pin (10) and movable with the lever (5) along the path (P).

8. Bonnet according to Claim 7, in which the pivoting axis (12) is defined by a bolt (22) mounted through the bottom wall (21).

9. Bonnet according to Claim 7 or 8, in which part of the second arm (19) extends along the lever (5) outside the channel (20).

10. Bonnet according to one of Claims 3 to 9 and comprising a strut (33) which projects towards the frame (15) from an end portion of the lever (5) and a ember (32) for fastening and laterally retaining the strut (33), able to be engaged by the strut (33) when the hatch (2) is in the closed position so as to prevent, in the event of an impact, the hatch (2) from being able to move backwards, becoming distorted and lifting upwards.

11. Vehicle provided with a bonnet (1) according to any one of the preceding claims.

## Patentansprüche

1. Fahrzeugfronthaube, wobei die Fronthaube (1) umfasst: einen Verschlussdeckel (2); einen Hebel (5), der mit dem Deckel (2) starr verbunden und an der Karosserie (3) des Fahrzeugs anlenkbar ist, so dass er ein Schwenken des Deckels (2) relativ zu der Karosserie (3) um eine Gelenkachse (7) zwischen einer offenen Position und einer geschlossenen Position ermöglicht; und eine Vorrichtung zum Verriegeln des Deckels (2) in der offenen Position; wobei die Verriegelungsvorrichtung eine Arretiervorrichtung (8) umfasst, welche an dem Hebel (5) angebracht ist und in der Lage ist, mittels Schnappeingriff auf eine lösbare Art und Weise den Hebel (5) bezüglich der Karosserie (3) in einer gegebenen gehobenen Position zu verriegeln, so dass der Deckel (2) in der offenen Position verriegelt wird;
**dadurch gekennzeichnet, dass** die Verriegelungsvorrichtung Sitzmittel (9) umfasst, welche an der Karosserie (3) parallel zu der Gelenkachse (7) und in einem gegebenen Abstand von der Gelenkachse (7) vorgesehen sind;
und **dadurch, dass** die Arretiervorrichtung (8) einen Stift (10) umfasst, der in der Lage ist, mit den Sitzmitteln (9) infolge der Druckkraft von Federmitteln (11) in Schnappeingriff zu gelangen; wobei der Stift (10) an dem Hebel (5) angebracht ist, sich parallel zu der Gelenkachse (7) erstreckt, beweglich bezüglich des Hebels (5) ist, so dass er um eine quer zu der Gelenkachse (7) verlaufende Schwenkachse (12) rotiert, und mit dem Hebel (5) entlang eines gegebenen Weges (P) beweglich ist; und wobei die Sitzmittel (9) entlang dieses Weges (P) angeordnet sind.

2. Fronthaube nach Anspruch 1, wobei der Hebel (5) einen Teil einer zirkelartigen Konstruktion (14) bildet, die einen Rahmen (15) umfasst, welcher starr mit der Karosserie (3) verbunden werden kann; wobei der Hebel (5) an dem Rahmen (15) angelenkt ist, so dass er relativ zu dem Rahmen (15) um die Gelenkachse (7) schwenkt.

3. Fronthaube nach Anspruch 2, wobei die Verriegelungsvorrichtung einen Sitz (9) umfasst, der in dem Rahmen (15) parallel zu der Gelenkachse (7) und in einem gegebenen Abstand von der Gelenkachse ausgebildet ist; und wobei der Stift (10) in der Lage ist, mit dem Sitz (9) infolge der Druckkraft von Federmitteln (11) in Schnappeingriff zu gelangen, an dem Hebel (5) angebracht ist, sich parallel zu der Gelenkachse (7) erstreckt, beweglich ist, so dass er relativ zu dem Hebel (5) um eine quer zu der Gelenkachse (7) verlaufende Schwenkachse (12) rotiert, und mit dem Hebel (5) entlang eines gegebenen Weges (P) beweglich ist, der sich durch den Sitz (9) erstreckt.

4. Fronthaube nach Anspruch 3, wobei der Rahmen (15) eine Platte (16) umfasst, die quer zu der Gelenkachse (7) angeordnet ist; wobei der Sitz (9) durch die Platte (16) gebildet wird und der Weg (P) sich entlang der Platte (16) erstreckt.

5. Fronthaube nach Anspruch 3 oder 4, wobei die Federmittel (11) so angebracht sind, dass sie den Stift (10) ständig in eine Richtung, die im Wesentlichen zu der Gelenkachse (7) parallel ist, und zu der Platte (16) hin drücken.

6. Fronthaube nach Anspruch 3 bis 5, wobei die Arretiervorrichtung (8) einen Kipphebel (17) umfasst, der an dem Hebel (5) angebracht ist, so dass er relativ zu dem Hebel (5) um die Schwenkachse (12) schwenkt, und der einen ersten Arm (18), der mit dem Stift (10) versehen ist, und einen zweiten Arm (19), der einen Hebel zum manuellen Lösen der Arretiervorrichtung (8) definiert, umfasst; wobei die Federmittel (11) zwischen dem zweiten Arm (19) und dem Hebel (5) angeordnet sind, so dass sie den Stift (10) zu dem Rahmen (15) hin drücken.

7. Fronthaube nach Anspruch 6, wobei der Hebel (5), im Querschnitt betrachtet, einen Längskanal (20) mit einer Bodenwand (21) und zwei Seitenwänden (23, 24), welche quer zu der Gelenkachse (7) verlaufen und von denen eine (23) dem Rahmen (15) zugewandt ist, aufweist; wobei wenigstens der erste Arm (18) des Kipphebels (17) innerhalb des Kanals (20) untergebracht ist; und wobei die dem Rahmen (15) zugewandte Seitenwand (23) eine Durchgangsbohrung (25) aufweist, in welche der Stift (10) eingreift und die mit dem Hebel (5) entlang des Weges (P) beweglich ist.

8. Fronthaube nach Anspruch 7, wobei die Schwenkachse (12) durch einen Bolzen (22) definiert ist, der durch die Bodenwand (21) hindurch angebracht ist.

9. Fronthaube nach Anspruch 7 oder 8, wobei sich ein Teil des zweiten Armes (19) entlang des Hebels (5) außerhalb des Kanals (20) erstreckt.

10. Fronthaube nach einem der Ansprüche 3 bis 9, umfassend eine Strebe (33), welche von einem Endabschnitt des Hebels (5) zu dem Rahmen (15) hin vorsteht, und ein Element (32) zum Befestigen und seitlichen Halten der Strebe (33), mit dem die Strebe (33) in Eingriff gelangen kann, wenn sich der Deckel (2) in der geschlossenen Position befindet, so dass verhindert wird, dass im Falle eines Aufpralls der Deckel (2) in der Lage ist, sich zurückzubewegen, deformiert wird und sich nach oben hebt.

11. Fahrzeug, das mit einer Fronthaube (1) nach einem der vorhergehenden Ansprüche ausgestattet ist.

## Revendications

1. Capot de véhicule, le capot (1) comprenant un panneau mobile de fermeture (2) ; un levier (5) relié de manière rigide au panneau mobile (2) et pouvant être attaché par une charnière à la carrosserie (3) du véhicule de manière à permettre au panneau mobile (2) de tourner, par rapport à la carrosserie (3), autour d'un axe charnière (7) entre une position ouverte et une position fermée ; et un dispositif destiné à bloquer le panneau mobile (2) dans la position ouverte ; le dispositif de blocage comprenant un dispositif d'arrêt (8) monté sur le levier (5) et capable de bloquer par mise en prise par encliquetage, de manière libérable, ledit levier (5) par rapport à la carrosserie (3) dans une position relevée donnée de manière à bloquer le panneau mobile (2) dans la position ouverte ;
**caractérisé en ce que** le dispositif de blocage comprend une assise (9) disposée sur la carrosserie (3) parallèlement à l'axe charnière (7) et à une distance donnée dudit axe charnière (7) ; et **en ce que** le dispositif d'arrêt (8) comprend une tige (10) capable de venir en prise par encliquetage avec l'assise (9) sous l'effet de la force de poussée d'un ressort (11); la tige (10) étant montée sur le levier (5), s'étendant parallèlement à l'axe charnière (7), étant mobile par rapport au levier (5) de manière à tourner autour d'un axe pivotant (12) transversal à l'axe charnière (7) et étant mobile, avec le levier (5), le long d'un trajet donné (P) ; et l'assise (9) étant agencée le long de ce trajet (P).

2. Capot selon la revendication 1, dans lequel le levier (5) fait partie d'un compas comprenant un cadre (15) pouvant être relié de manière rigide à la carrosserie (3) ; le levier (5) étant fixé par une charnière à la carrosserie (15) de manière à tourner, par rapport à ladite carrosserie (15), autour de l'axe charnière (7).

3. Capot selon la revendication 2, dans lequel le dispositif de blocage comprend une assise (9) formée dans le cadre parallèlement à l'axe charnière (7) et à une distance donnée dudit axe charnière ; et dans lequel la tige (10) est capable de venir en prise par encliquetage avec l'assise (9) sous l'effet de la force de poussée exercée par le ressort (11), est montée sur le levier (5), s'étend parallèlement à l'axe charnière (7), est mobile de manière à tourner, par rapport au levier (5), autour d'un axe pivotant (12) transversal à l'axe charnière (7), et est mobile, avec le levier (5), le long d'un trajet donné (P) s'étendant à travers l'assise (9).

4. Capot selon la revendication 3, dans lequel la carrosserie (15) comprend une plaque (16) transversale à l'axe charnière (7) ; l'assise (9) étant formée à travers la plaque (16) et le trajet s'étendant le long de ladite plaque (16).

5. Capot selon la revendication 3 ou 4, dans lequel le ressort (11) est monté de manière à exercer une poussée constante sur la tige (10) dans une direction sensiblement parallèle à l'axe charnière (7) et vers la plaque (16).

6. Capot selon les revendications 3 à 5, dans lequel le dispositif d'arrêt (8) comprend un balancier (17) monté sur le levier (5) de manière à tourner, par rapport audit levier (5), autour de l'axe pivotant (12) et comprenant un premier bras (18) muni d'une tige (10) et un second bras (19) définissant un levier destiné à libérer manuellement ledit dispositif d'arrêt (8) ; le ressort (11) étant agencé entre le second bras (19) et le levier (5) de manière à pousser la tige (10) vers la carrosserie (15).

7. Capot selon la revendication 6, dans lequel le levier (5) présente, lorsqu'on l'observe en coupe transversale, un canal longitudinal (20) comportant une paroi inférieure (21) et deux parois latérales (23, 24) transversales à l'axe charnière (7) et dont l'une (23) est orientée vers la carrosserie (15) ; au moins le premier bras (18) du balancier (17) étant logé à l'intérieur du canal (20) ; et la paroi latérale (23) orientée vers la carrosserie (15) présentant un trou débouchant (25) avec lequel la tige (10) vient en prise et pouvant se déplacer avec le levier (5) le long du trajet (P).

8. Capot selon la revendication 7, dans lequel l'axe pivotant (12) est défini par un boulon (22) monté à travers la paroi inférieure (21).

9. Capot selon la revendication 7 ou 8, dans lequel une partie du second bras (19) s'étend le long du levier (5) hors du canal (20).

10. Capot selon l'une des revendications 3 à 9, comprenant en outre une entretoise (33) faisant saillie vers la carrosserie (15) depuis une partie d'extrémité du levier (5) et un élément (32) destiné à attacher et à retenir de manière latérale l'entretoise (33), avec lequel l'entretoise (33) peut venir en prise lorsque le panneau mobile (2) est dans la position fermée de manière à empêcher, en cas d'impact, le panneau mobile (2) de pouvoir se déplacer vers l'arrière, de se déformer et de se soulever vers le haut.

11. Véhicule muni d'un capot (1) selon l'une quelconque des revendications précédentes.
